# EUROPEAN PATENT SPECIFICATION

(11) **EP 3 881 636 B1**
(45) Date of publication and mention of the grant of the patent: **06.09.2023**
(21) Application number: 18939984.3
(22) Date of filing: 14.11.2018
(51) Int. Cl.: H04W 76/14, H04W 4/40, H04W 4/46, H04W 72/02, H04W 72/04

(54) **METHODS AND WIRELESS DEVICES FOR DEVICE TO DEVICE COMMUNICATION**
VERFAHREN UND DRAHTLOSE VORRICHTUNGEN FÜR D2D-KOMMUNIKATION
PROCÉDÉS ET DISPOSITIFS SANS FIL DESTINÉS À UNE COMMUNICATION DE DISPOSITIF À DISPOSITIF

(43) Date of publication of application: 22.09.2021
(73) Proprietor: Telefonaktiebolaget LM Ericsson (publ), 164 83 Stockholm (SE)
(72) Inventor: DO, Hieu, 177 32 Järfälla (SE); SUN, Wanlu, San Diego, CA 92129 (US); FODOR, Gabor, 165 52 Hässelby (SE); BLASCO SERRANO, Ricardo, 11828 Espoo (FI); SORRENTINO, Stefano, 118 21 Stockholm (SE)
(74) Representative: Ericsson
(86) International application number: PCT/SE2018/051165
(87) International publication number: WO 2020/101546

(56) References cited:
- US-A1- 2017 295 567
- INTERDIGITAL INC: "Resource Allocation in Support of Unicast and Groupcast", 3GPP DRAFT; R2-1814017 (R16 V2X SI A11424 RESOURCE ALLOCATION FOR UNICAST GROUPCAST), 3RD GENERATION PARTNERSHIP PROJECT (3GPP), MOBILE COMPETENCE CENTRE ; 650, ROUTE DES LUCIOLES ; F-06921 SOPHIA-ANT , vol. RAN WG2, no. Chengdu, China; 20181008 - 20181012 28 September 2018 (2018-09-28), XP051523479, Retrieved from the Internet: URL:http://www.3gpp.org/ftp/tsg%5Fran/WG2% 5FRL2/TSGR2%5F103bis/Docs/R2%2D1814017%2Ez ip [retrieved on 2018-09-28]
- INTERDIGITAL INC: "Resource Allocation for NR V2X", 3GPP DRAFT; R1-1813164 (R16 V2X WI AI72414 RESOURCE ALLOCATION), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20181112 - 20181116 11 November 2018 (2018-11-11), XP051555157, Retrieved from the Internet: URL:http://www.3gpp.org/ftp/Meetings%5F3GP P%5FSYNC/RAN1/Docs/R1%2D1813164%2Ezip [retrieved on 2018-11-11]
- INTEL: "Further Considerations on Sidelink Unicast/Groupcast/Broadcast for NR V2X", 3GPP Draft R1-1812492, 11 November 2018 (2018-11-11), XP051478721,
- CMCC: "Discussion on resource allocation mechanism for NR V2X", 3GPP Draft R1-1812880, 11 November 2018 (2018-11-11), XP051479127,
- SONY: "Discussion on NR V2X resource allocation mechanism", 3GPP Draft R1-1813139, 11 November 2018 (2018-11-11), XP051479405,
- HUAWEI et al.: "Sidelink resource allocation mode 2", 3GPP Draft R1-1812209, 11 November 2018 (2018-11-11), XP051478365,

## Description

### Technical Field

The present disclosure relates generally to methods and wireless devices for device-to-device communication. More specifically, the present disclosure relates generally to methods and wireless devices for reserving communication resources in device-to-device communication. The present disclosure further relates to computer programs and carriers corresponding to the above methods and devices.

### Background

As wireless communication technology evolves, demand has evolved for communication directly between wireless communication devices, also called wireless devices or User Equipments (UEs). Such a direct communication is commonly called Device to Device (D2D) communication. One area where such D2D communication is developed is in vehicular traffic situations, in which wireless devices mounted in vehicles such as cars communicate with other wireless devices, so called Vehicle to anything (V2X) communication. V2X comprises vehicle to vehicle (V2V) communication, and vehicular wireless devices communicating with wireless devices of persons not being in vehicles, such as pedestrians or persons riding on bicycles, so called Vehicle to Pedestrian (V2P) communication, and Vehicle to Infrastructure (V2I) communication, i.e. when the vehicular wireless device communicates with infrastructure of a wireless communication network. The V2V and V2P can be seen as special cases of D2D communication.

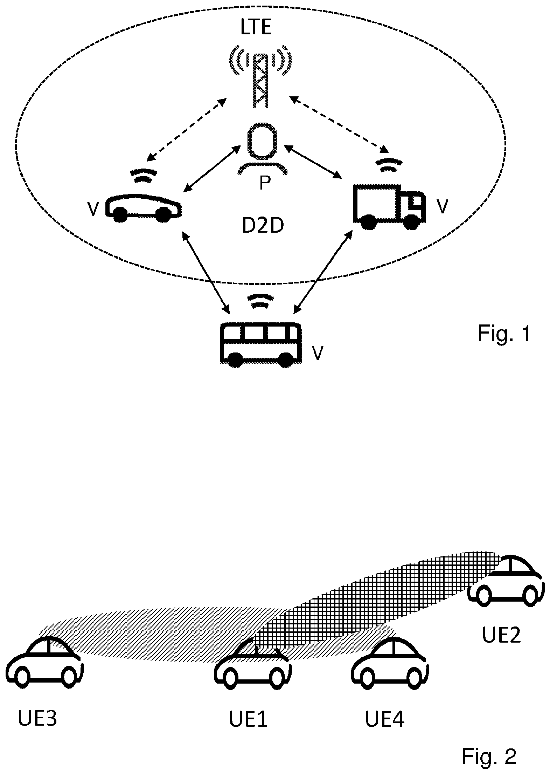

In the 3GPP standard Release 14, released in September 2016, the Long term Evolution (LTE) V2X communication was standardized. The 3GPP Release 14 comprises new features and enhancements that allow for vehicular communications. One of the most relevant aspects in Release 14 is the introduction of direct V2V communication functionalities, i.e. peer to peer communication. Release 16, which is the first release for New Radio (NR) V2X, is currently being developed. Fig. 1 shows V2X scenarios for an LTE based network. The continuous arrows symbolizes D2D communication, such as V2V and V2P. The dashed arrows symbolizes communication with the LTE network, i.e. V2I, where "I" is illustrated with a radio base station mast.

The D2D communication functionalities are built upon LTE D2D, also known as ProSe (Proximity Services), as first specified in the Release 12 of LTE, and include many enhancements targeting the specific characteristics of vehicular communications. For example, LTE V2X operation is possible with and without network coverage and with varying degrees of interaction between the involved UEs and the network (NW), including support for standalone, networkless operation. To enhance the network level performance under high density use cases while meeting the latency requirements of V2X, new transmission modes, also referred to as resource allocation modes, were introduced: Mode 3 and Mode 4. In Mode 3, the NW is in charge of performing resource allocation for the UEs whereas in Mode 4, each UE autonomously selects the resources for its transmissions.

LTE V2X Rel-14/15 design only aims at unacknowledged broadcast services, which means the intended receiver of each transmission is all the UEs within relevant distances to the transmitter and no feedback from the receiver to the transmitter is required. However, in current 3GPP NR studies, it is expected that unicast and multicast V2X transmissions, i.e. the intended receiver is a single UE, in the case of unicast, or a set of UEs, in the case of multicast, will also be important since they are needed for some evolved V2X use cases, e.g., platooning, see-through, and cooperative maneuver.

As mentioned, V2X communication includes V2V, V2P and V2I communications. A wireless devices mounted on a vehicle is sometimes referred to as a vehicle UE (V-UE). V2P communication involves V-UEs as well as pedestrian UEs (P-UEs). The P-UEs are usually handheld wireless devices. P-UEs and V-UEs have different sets of requirements and constraints. For example, P-UEs are subject to energy constraints, whereas V-UEs are connected to the vehicle engine and thus have no battery concerns. This implies that V-UEs and P-UEs have different capabilities to handle V2X communications, where V-UEs are usually considered as advanced UEs while P-UEs are usually considered as UEs with limited capabilities. Moreover, P-UEs can also be categorized into different categories, i.e., P-UEs with Side Link (SL) reception capabilities and P-UEs without SL reception capabilities. This disclosure concerns mainly V-UEs and P-UEs with SL reception capabilities.

In SL transmission mode 4 (mentioned above), distributed resource selection is employed, i.e., there is no central node for scheduling and the involved UEs play the same role in autonomous resource selection. Transmission Mode 4 is based on two functionalities: semi-persistent transmission and sensing-based resource allocation. Semi-persistent transmission is a type of transmission in which the UE sending a message also notifies the receivers about its intention to transmit using certain time-frequency resources at a later point in time. For example, a UE transmitting at time T informs the receivers that it will transmit using the same frequency resources at time T + 100 ms. This is called resource reservation or resource booking and is especially suitable for the type of vehicular applications targeted by LTE Release 14, which relies on the periodic transmission of packets.

Semi-persistent transmission allows a UE to predict the utilization of the radio resources in the future. That is, by listening to the current transmissions of another UE, it also obtains information about potential future transmissions. This information can be used by the UE to avoid collisions when selecting its own resources for transmission. Specifically, a UE predicts the future utilization of the radio resources by reading received booking messages and then schedules its current transmission to avoid using the same resources. This is known as sensing-based resource selection.

The sensing-based resource selection scheme specified in Rel-14 includes the following three key steps.
- Step 1: A UE that is to transmit data initially considers all communication resources as available candidates for transmission.
- Step 2: The UE excludes communication resources based on scheduling assignment (SA) decoding and additional conditions. A communication resource is excluded if it is indicated as reserved or booked by a decoded SA and a Physical Sidelink Shared Channel (PSSCH) reference signal received power (RSRP) in the associated data resources is above a preconfigured threshold.
- Step 3: The UE measures and ranks the remaining communication resources based on Received Signal Strength Indicator (RSSI) measurements and selects a subset of the communication resources. The subset is the set of candidate communication resources with the lowest total received energy. The size of the subset is, e.g., 20%, of the total communication resources within a selection window.

To implement the sensing-based resource selection scheme, a UE that has data to transmit needs to sense the channel for some time duration (i.e. a sensing window) preceding the selection trigger to gather booking messages. It is clear that to achieve good performance the sensing window must be long enough to include as many bookings as possible or as necessary. Commonly, the size of the sensing window is sufficiently large to roughly cover the longest possible booking, which is considered as full-sensing procedure. However, with long sensing windows, there is a large energy consumption associated with sensing. In addition, large sensing windows may require the UE to perform complex operations quickly. This may be problematic for some types of UEs that are subject to restrictions on capabilities and/or energy, e.g., the P-UEs.

To solve this problem for UEs with limited capabilities, partial-sensing and random resource selection have been proposed. In partial-sensing procedure, the UE senses only a subset of the resources within the sensing window of the full-sensing scheme. In random resource selection, the resource is selected by a UE in a random manner, i.e., no sensing process is used.

The above described resource selection was designed for broadcast communication as Release 14/15 aims at broadcast communication. However, with the planned introduction of unicast and multicast transmissions in Release 16, it has proven that the used communication resource selection process is not efficient enough. In other words, there is a need of an improved communication resource selection process in D2D communication that is more suitable for unicast and multicast communication.

3GPP draft R2-1814017 discusses potential selection modes for UE autonomous resource selection, including 1) at least two sidelink resource allocation modes for NR-V2X communication, and 2) study details of resource allocation modes for NR-V2X sidelink communication.

### Summary

The invention is set out in the appended claims.

It is an object of embodiments to address at least some of the problems and issues outlined above. An object of embodimentsis to improve existing communication resource selection processes in D2D communication. It is possible to achieve these objects and others by using methods and first and second wireless devices as defined in the attached independent claims.

### Brief Description of Drawings

The solution will now be described in more detail by means of exemplary embodiments and with reference to the accompanying drawings, in which:
Fig. 1 is a schematic block diagram illustrating different V2X communication scenarios, according to the prior art.
Fig. 2 is a diagram illustrating vehicle communication scenarios where a communication collision is possible between a communication from UE2 to UE1 and a communication from UE4 to UE3.
Fig. 3 is a schematic block diagram illustrating a communication scenario in which the embodiments may be used.
Fig. 4 is a flow chart illustrating a method performed by a first wireless communication device, according to embodiments.
Fig. 5 is a flow chart illustrating a method performed by a second wireless communication device, according to embodiments.
Fig. 6 is a signaling diagram illustrating an example of signals sent between involved UEs, according to embodiments.
Fig. 7 is a block diagram illustrating a first wireless communication device in more detail, according to embodiments.
Fig. 8 is a block diagram illustrating a second wireless communication device in more detail, according to embodiments.

### Detailed Description

As described in the Background, in LTE V2X mode 4, each UE that is to transmit data D2D autonomously selects resources for transmission by listening to transmissions as well as to resource reservations of other UEs, thereby predicting the availability of resources in the future. Accordingly, in prior art there is no explicit cooperation between a transmitting UE and a receiving UE in selecting resources for the communication in between them. While such a unilateral resource selection mechanism as in prior art is suitable for V2X broadcast use cases, it is likely suboptimal for unicast or multicast communication. The reason is that for unicast and multicast the transmitting UE and the receiving UE(s) are often aware of the identity of each other, e.g. via a discovery or connection setting phase, and therefore they can use that information to assist each other in finding the best communication resources for their mutual communication. Moreover, unlike broadcast communications, in unicast and multicast the transmitter of a packet often expects some response or feedback from the receiver(s) of the packet. In that case it would be beneficial for the transmitting UE to know in advance where and when to receive the response.

Further, an important issue with the existing Mode-4 resource selection mechanism is the following: Since a communication resource is selected based merely on a transmitting UE's point of view, it might not be favorable for the signal reception at the receiving UE. An example is given in Fig. 2, which shows four V-UEs: UE1, UE2, UE3 and UE4. In this example UE1 lies in the coverage of a directional transmission from UE4 to UE3, for example, a beam-formed transmission or a transmission using directional antennas, which occupies certain resources. A UE2 who lies outside the coverage of the UE4-to-UE3 transmission wants to communicate with UE1. Obviously, UE2 cannot detect the transmission of UE4 via its own sensing process and therefore UE2 may choose the same communication resources as those being used by UE4 for its transmission to UE1. The UE2 transmission to UE1 is in the example of fig. 2 also a directional transmission. As a result, the transmissions of UE2 and UE4 may collide at UE1. This kind of collision due to directional transmissions is a major problem in peer-to-peer networks, especially when beamforming is becoming more and more prevalent in Multiple Input Multiple Output (MIMO) systems at both low and high frequency bands. Moreover, for the UEs with limited capabilities, e.g., P-UEs, partial-sensing based resource selection or random resource selection can be applied. In this case, inappropriate transmission resources may be selected due to the limited/incomplete resource candidates or the pure random selection mechanism.

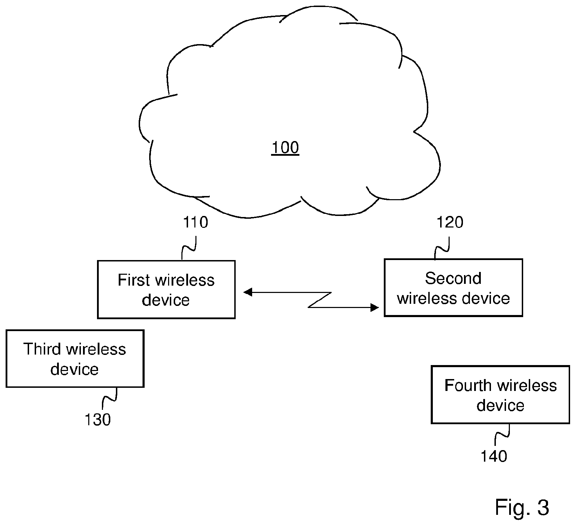

Before presenting an embodiment for solving the above issues, a scenario in which the present invention may be used is presented in fig. 3. Fig. 3 comprises a second wireless device 120 that wants to transmit data D2D to a first wireless device 110. In the vicinity of the first wireless device 110 there are third wireless devices 130 that the first wireless device 110 can hear. Further, in the vicinity of the second wireless device 120 there are fourth wireless devices 140 that the second wireless device 120 can hear. Most probably there would be a subset of devices that both the first and the second wireless device 110, 120 can hear, i.e. there are wireless devices that belong to both the third wireless devices 130 and the fourth wireless devices 140 but to simplify the figure, the third and fourth wireless devices are illustrated as one device each. In fig. 3 there is also a wireless communication network 100 comprising wireless communication infrastructure such as radio access network nodes, e.g. base stations or eNodeBs, for providing wireless connection to wireless devices.

The first, second, third and fourth wireless devices 110, 120, 130, 140 may be any type of devices capable of wirelessly communicating D2D using radio signals. For example, the wireless device 140 may be a User Equipment (UE), a machine type UE or a UE capable of machine to machine (M2M) communication, a sensor, a tablet, a mobile terminal, a smart phone, a laptop embedded equipped (LEE), a laptop mounted equipment (LME), a USB dongle, a Customer Premises Equipment (CPE), a vehicle UE etc.

The wireless communication network 100 may be any kind of wireless communication network that can provide radio access to wireless devices. Example of such wireless communication networks are Global System for Mobile communication (GSM), Enhanced Data Rates for GSM Evolution (EDGE), Universal Mobile Telecommunications System (UMTS), Code Division Multiple Access 2000 (CDMA 2000), Long Term Evolution (LTE), LTE Advanced, Wireless Local Area Networks (WLAN), Worldwide Interoperability for Microwave Access (WiMAX), WiMAX Advanced, as well as fifth generation wireless communication networks based on technology such as New Radio (NR).

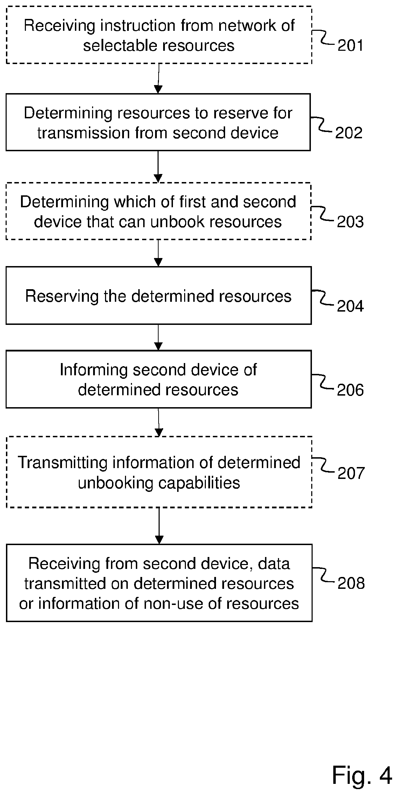

Fig. 4, in conjunction with fig. 3, describes a method performed by a first wireless device 110 for device to device (D2D) communication with a second wireless device 120. The method comprises determining 202 a set of wireless communication resources to reserve for a transmission of data from the second wireless device 120 to the first wireless device 110, and reserving 204 the determined set of wireless communication resources. The method further comprises informing 206 the second wireless device 120 of the set of wireless communication resources determined for the transmission of data from the second wireless device 120 to the first wireless device 110, and receiving 208, from the second wireless device 120, data transmitted on any of the reserved set of wireless communication resources, or information that the second wireless device 120 is not going to use the reserved set of wireless communication resources.

"Wireless communication resources" comprises resources in time and frequency, i.e. certain periods of time combined with certain frequencies. In case of directional communication, "wireless communication resources" may also comprise resources in space. By letting the first wireless device 110, which is the wireless device that is to receive the transmission of data, determine and reserve a set of wireless communication resources suitable for use in a D2D communication, the reception quality of a transmission can be improved compared to letting only the second wireless device 120, i.e. the wireless device that is to transmit the data determine and reserve suitable communication resources. Still, as the first wireless device 110 can either receive data transmitted in the reserved set of wireless communication resources, or receive an information from the second wireless device 120 that it is not going to use the reserved resources, it means the second wireless device 120 has the possibility to decide whether to use the determined wireless communication resources received from the first wireless device or not. Consequently, such a method results in an improved communication resource selection process in D2D communication that is more suitable for unicast and multicast communication as it takes the signal conditions at the receiving wireless device into consideration. Also, in case the second wireless device 120 has limited capacity compared to the first wireless device 110, the capacity of the second wireless device can be saved. One example use case of this is when the first wireless device is installed in a car and the second wireless device is a hand-held UE (Vehicle to Person communication).

According to embodiments, the reserving 204 and the informing 206 comprises transmitting one message to the second wireless device 120 and to third wireless devices 130 in the vicinity of the first wireless device 110, the message comprising information of the determined set of wireless communication resources. This transmission of information of the determined set of wireless communication resources in one and the same message to both the second wireless device as well as to the third wireless devices, functions both as a reservation of the resources, so that the other devices in the vicinity, here called third wireless devices, are informed of the intention to transmit and will then not used those resources, and as an information to the second wireless device of the reservation. Hereby the set of communication resources are reserved and the second wireless device is informed of the reservation at the same time.

According to embodiments, the reserving 204 comprises transmitting, to third wireless devices 130 in the vicinity of the first wireless device 110, reservation information of the determined set of wireless communication resources. Further, the informing 206 comprises transmitting separate information to the second wireless device 120 of the determined set of wireless communication resources. By separately informing the second wireless device of the reservation information, it is possible to send other data solely to the second device together with this separate information. Also, the first wireless device has a defined message to which to await a possible reception acknowledgement from. The separate information transmitted to the second wireless device 120 may be sent in another message/signal compared the message/signal sent to the third wireless devices 130 informing them of the reservation.

According to embodiments, the set of wireless communication resources comprises information of a set of spatial segments or directions in which the second wireless device 120 is to transmit wireless signals transporting the data received 208 from the second wireless device 120. By reserving spatial segments or directions in which the second wireless device 120 is to transmit towards the first wireless device 110, a more efficient resource utilization is achieved compared to only reserving in time and frequency. For example, the third wireless devices 130 can plan future transmissions that overlap in time and/or frequency with this transmission if such an overlapping transmission can be separated spatially.

According to embodiments, the determining 202 is performed by observing wireless communication of third wireless devices 130 in the vicinity of the first wireless device 110 and selecting wireless communication resources not indicated to be used by the third communication device. Hereby it is avoided to select any communication resources that are to be used the third communication devices.

According to a variant of this embodiment, the observing comprises reading control messages sent by the third wireless devices 130 or measuring signal strength over time for signals sent by the third wireless devices 130. The control messages may be scheduling assignments and/or reservation messages.

According to embodiments, the determining 202 is further performed based on capabilities of the first wireless device 110. Examples of capabilities of the first wireless device are bandwidth limiting capabilities, how many antennas the first wireless antenna has and if it has a possibility to scan directions. By taking into account the capabilities of the receiving wireless device, a more optimal selection of communication resources can be performed.

According to embodiments, the method further comprises determining 203 which of the first wireless device 110 and the second wireless device 120, or both, that can unbook the reserved set of wireless communication resources, and transmitting 207 to the second wireless device 120, information on the determined unbooking capabilities of at least the second wireless device. By such a characteristic, it is possible to unbook the booked capabilities when it has been determined that they are not to be used, making it possible for any of the third wireless devices to use the previously booked resources.

According to embodiments, the method further comprises receiving 201, from a wireless communication network 100, an instruction of a group of wireless communication resources that are selectable in the determination 202 of the set of wireless communication resources. In other words, the group of wireless communication resources has a larger amount of communication resources than the set of wireless communication resources. Preferably, the group of wireless communication resources comprises the set of wireless communication resources, i.e. the set of resources is a sub-set of the group of resources, or the set of resources is at least partly within the group so that some of the resources in the set are selectable. The instruction that the first device receives, restricts the amount of resources to check in the determining 202, from all resources in the vicinity of the first device to the group of resources. Hereby, the determination will be quicker.

According to embodiments, the method may further comprise transmitting a priority level of the reserved set of wireless communication resources to the second wireless device. The priority level may be sent as a priority flag, i.e. one bit is used. By including a priority level, communication resources can be made available with a higher probability for some highly prioritized users, such as for wireless devices of blue light vehicles, e.g. ambulance or police cars.

According to embodiments, the received 208 information that the second wireless device 120 is not going to use the reserved set of wireless communication resources is an unbooking message informing that the reserved set of wireless communication resources are not to be used. Alternatively, the received 208 information that the second wireless device 120 is not going to use the reserved set of wireless communication resources is a notification to the first wireless device 110 to send an unbooking message to third wireless devices 130 in the vicinity of the first wireless device 110. According to a variant of this embodiment, when the received information is a notification to the first wireless device 110 to send an unbooking message, the method further comprises sending an unbooking message to the third wireless devices 130 in the vicinity of the first wireless device 110, in response to the received information.

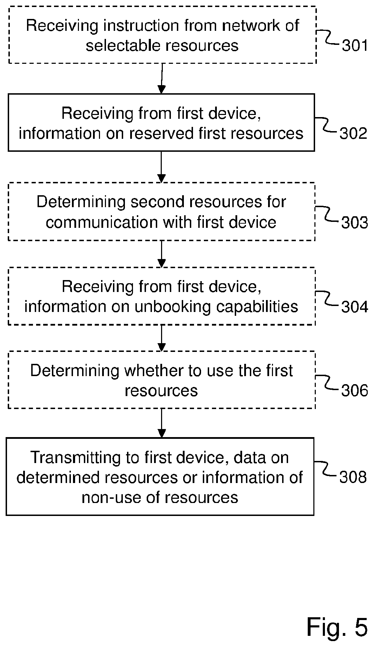

Fig. 5, in conjunction with fig. 3, describes a method performed by a second wireless device 120 for D2D communication with a first wireless device 110. The method comprises receiving 302 from the first wireless device 110, information on a first set of wireless communication resources that the first wireless device has reserved for a transmission of data from the second wireless device 120 to the first wireless device; and transmitting 308, to the first wireless device 110, data on any of the reserved first set of wireless communication resources, or information that the second wireless device 120 is not going to use the reserved first set of wireless communication resources. Such a method makes it possible for the second wireless device to either just accept the reserved first set of wireless communication resources and transmit on it, or the second wireless device may determine that it is not going to use the resources and then informs the first wireless device that it is not going to use the resources. Whether the second wireless device is going to use the first set of communication resources reserved by the first wireless device can be based on certain possible conditions that are shown below.

According to embodiments, the method further comprises determining 306 whether to use the reserved first set of wireless communication resources. Further, the transmitting 308 is performed based on the result of the determination 306. In other words, if it is determined not to use the first set of wireless resources, the second wireless device transmits information that it is not going to use the reserved first set of wireless communication resources.

According to embodiments, the method further comprises determining 303 a second set of wireless communication resources suitable for communication with the first wireless device 110. Further, the determining 306 whether to use comprises comparing the second set of wireless communication resources with the first set of wireless communication resources and selecting a subset of the first set and the second set of wireless communication resources that lies in an intersection of the first set and the second set of wireless communication resources. Then the transmitting 308 of data comprises transmitting data on the selected subset of resources. Hereby communication resources can be selected that suits both the first and the second wireless device well, resulting in improved wireless communication between the first and the second wireless device.

According to embodiments, the determining 303 of a second set of wireless communication resources is based on sensing of communication of fourth wireless devices 140 in the vicinity of the second wireless device 120.

According to embodiments, the sensing of communication of fourth wireless devices 140 comprises measuring signal strength over time for signals sent by the fourth wireless devices or reading of control messages sent by the fourth wireless devices 140. The control messages may be scheduling assignment and/or reservation messages.

According to embodiments, the received 302 information on a first set of wireless communication resources comprises information on spatial segments or directions in which to transmit the data to the first wireless device 110, and wherein the determining 306 whether to use further comprises determining whether to use the information of spatial segments or directions for the transmission 308 of the data to the first wireless device 110.

According to embodiments, the method further comprises receiving 304 from the first wireless device 110, information on unbooking capabilities of at least the second wireless device 120. Also, the transmitting 308 of data or information that the second wireless device 120 is not going to use the reserved first set of wireless communication resources takes the information on unbooking capabilities into account.

According to embodiments, the transmitting 308 comprises transmitting an unbooking message to the first wireless device 110 and to fourth wireless devices 140 in the vicinity of the second wireless device 120.

According to embodiments, the transmitting 308 comprises transmitting a notification to the first wireless device 110 to send an unbooking message to third wireless devices 130 in the vicinity of the first wireless device.

According to embodiments, the method further comprises receiving 301, from a wireless communication network 100, an instruction of a group of wireless communication resources that are selectable in the determination 306 whether to use the reserved first set of wireless communication resources.

The following embodiments are described in the context of V2X communications, but it can also be advantageously applied to other contexts of wireless communication between wireless devices, such as D2D. In embodiments, a method is described mainly concerning two UEs (UE1 and UE2), involving in a unicast or multicast communication session. In such a scenario, the two UEs often exchange messages with each other and it is typical that UE1 knows in advance that it will receive a packet from UE2 in the coming time, for example a reply message to a message the UE1 has just sent to UE2. It is therefore beneficial for UE1 to take part in the selection of resources for the transmissions of packets from UE2 to UE1, e.g., so that the selected resources are good for the reception of the packets at UE1. The participation of UE1 in the transmit resource selection by UE2 can also reduce the computation complexity when UE2 performs the selection. The idea is to allow UE1 to reserve resources for the transmission of packets from UE2 to UE1 and to inform UE2 about this reservation. Such information will be used by UE2 when selecting resources for transmission to UE1. Also, depending on certain rules, either UE1 or UE2 or both of them can unbook the reserved resources if the resources are not used, giving opportunity for other UEs in the network to use the resources. In this section, the term resources, or communication resources, refers to a set of frequency, time, and spatial resources. The space dimension can refer to the direction of a transmission or a reception, typically achievable by using directional antennas or by beamforming using antenna arrays. The embodiment is typically applicable when a connection has been established between UE1 and UE2, thereby UE1 can expect future transmissions from UE2 to UE1.

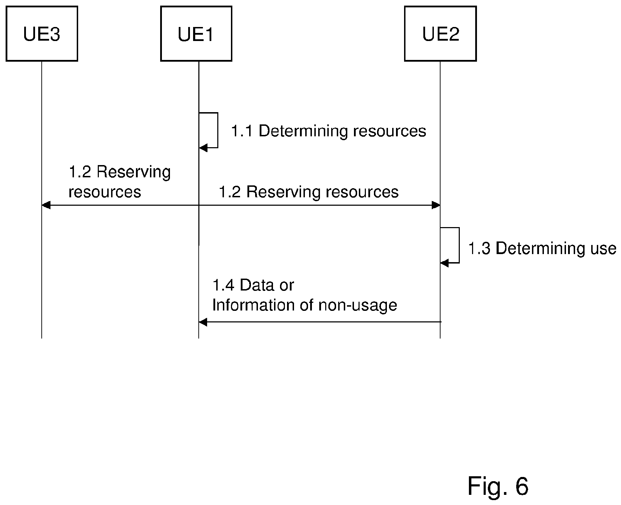

An exemplary method for resource reservation is described in fig.6. UE3 resembles UEs in the vicinity of UE1 other than UE2. The method comprises the following steps: UE1 determines 1.1 a set of resources to be used for receiving a transmission from UE2. The resources are characterized by time, frequency, and spatial directions. Thereafter, UE1 reserves 1.2 the determined resources for a transmission from UE2 to UE1. The reservation may be performed by UE1 sending a first packet to UE2 and to UE3 indicating the reservation of the set of resources. The reservation is performed at T1 and the resources are reserved for a time T2 that is later than T1. By receiving the first packet from UE1, UE3 is informed of the reservation and will not use the reserved resources itself. When receiving the reservation, UE2 determines 1.3 whether it wants to use the reserved resources for its transmission to UE1 or not. Depending on the determination in step 1.3, UE2 will send 1.4 a second packet comprising either data sent over the reserved resources or an information that the resources are not to be used. In other words, if UE2 determines 1.3 to use at least part of the reserved resources, UE2 sends data 1.4 in the at least part of the reserved resources. If UE2 determines 1.3 not to use the reserved resources, UE2 informs 1.4 UE1 that it is not going to use the reserved resources.

According to embodiments of the exemplary method, UE1 may also determine whether the reserved resources can be unbooked by UE1 or if they can be unbooked by UE2, or if both UE1 and UE2 can unbook the resources. In this embodiment, UE1 indicates to UE2 whether UE2 can unbook the reserved resources or not. This indication may be sent in the resource reservation message 1.2. If UE2 determines 1.3 not to use the reserved resources, it checks from the indication it received from UE1 whether it is allowed to unbook the resources itself. If so, UE2 informs both UE3 and UE1 of its intention not to use the reserved resources by sending an unbooking message. If it is not allowed to unbook the resources, UE2 informs UE1 that it will not use the resources and UE1 can decide whether to use the resources for any other transmission or whether it unbooks the resources by informing UE3 of its intention not to use the reserved resources.

The reserved resources may include a set of time and frequency resources, e.g. a number of time slots and frequency channels or resource blocks, and possibly also spatial information, which UE2 should use for its transmission to UE1. Such spatial information can include the coordinates of UE1 and UE2, or one or more spatial segments that UE2 should use for its transmission to UE1. A spatial segment is characterized by an angle of departure at UE2 and a beam width that will be reserved to be use by UE2 in the specific frequency channels and time slots that constitute the determined resources.

In embodiments, the first packet sent from UE1 only includes the indication of the reserved resources from UE1. In embodiment, the first packet also contains a message UE1 wants to send to UE2. In embodiments, the second packet sent from UE2 to UE1 contains a reply message from UE2 to UE1. For example, the second packet can contain feedback information about the reception of the first packet, e.g., ACK/NACK to indicate whether the first packet has been successfully received by UE2. In another example, the second packet contains indicators of the channel state information (CSI) of the channel between UE1 and UE2, which can be either full CSI or some channel quality indicator (CQI). The second packet can also contain suggestions from UE2 to UE1 about the methods of transmission from UE1 to UE2, e.g., the precoding matrix indicator (PMI) or rank indicator (RI).

The determination 1.1 of the resources on which UE1 wants to receive a transmission from UE2 can be achieved via a sensing process performed by UE1. The sensing process can include reading control information from other UEs in the network, such as UE3, to infer which resources are available. The reading of control information typically also includes reading resource reservation messages sent by other UEs such as UE3. The sensing can also include UE1 measuring the signal strength at different resource elements and at different spatial directions of signals sent by the other UEs.

In embodiments, UE1 determines 1.1 the set of resources based also on its capability. The capability may be the number of antennas that UE1 has, which dictates how narrow a receiving beam can be formed at UE1, which in turn determines the granularity in the spatial domain in the reserved resources.

In embodiments, UE1 is configured by the communication network or is preconfigured with a set of resources that UE1 can reserve. For example, the reservable resources can exclude the resources used by the network for network-scheduled SL transmissions.

In embodiments, UE1 determines whether only UE1 or only UE2 or either of UE1 and UE2 can unbook the determined resources once the resources are reserved by UE1 for a transmission from UE2 to UE1. In some cases, these rules are configured by the communication network, e.g. for in-coverage UEs, or are preconfigured, e.g. for out-of-coverage UEs.

The reservation of resources 1.2 can be achieved by UE1 transmitting a reservation message to other UEs in its proximity. Usually the reservation message is broadcasted. In embodiments, the reservation message is sent in a control channel packet, e.g., as a field in the side link control information (SCI) in a Physical Sidelink Control Channel (PSCCH) packet.

In embodiments, UE1 further indicates the reserved resources to UE2 in a packet sent to UE2 only. For example, the packet sent to UE2 only may be sent by a directional transmission using a previously selected resource for communication between UE1 and UE2. In embodiments, the packet sent to UE2 only is sent in a data channel packet, e.g. a Physical Sidelink Shared Channel (PSSCH) packet. In embodiments, the packet sent to UE2 only contains information about the reserved resources. In embodiments, the packet sent to UE2 only also contains other information that UE1 wants to send to UE2, e.g., a message that UE1 wants to deliver to UE2.

In embodiments, UE1 can include its receiver capabilities in the reservation 1.2, such as multi-user MIMO receiver capabilities. The reservation 1.2 can further contain parameters used by UE1 in the sensing process regarding the reserved resources, for example, the used power or energy thresholds, or the used channel busy ratio (CBR).

In embodiments, UE1, at the time of reservation, can associate a booking priority with the reservation 1.2. A high priority booking may invalidate or override a lower priority booking that was made at an earlier point in time.

In embodiments, UE1, at the time of reservation, can include with the reservation 1.2 information about the transmission characteristics of the future transmission that the reservation concerns. Such information may include, for example, a planned direction of the transmission (in a predefined coordinate system) or maximum transmit power level to use by UE2.

In embodiments, the reserved resources are a set of periodically repeated resources. In embodiments UE1 excludes the reserved resources from the set of available resources for its future transmissions.

In embodiments, UE1 indicates in the reservation message 1.2 to other UEs in the network that the reserved resources is to be used for a transmission from UE2 to UE1 and that either only UE1 or only UE2 or any of UE1 and UE2 can unbook the reserved resources. The determination of who can unbook the reserved resources are preferably done in step 1.1.

The UEs (other than UE1 and UE2), i.e. UE3, who receive the reservation message 1.2, take the reservation information into account in their resource sensing and selection process. As an example, the reserved resources are excluded, by UE3, from the set of available resources. In another example, the UE3 can opportunistically use the reserved resource when they receive an unbooking message from either UE1 or UE2 regarding the resources (at step 1.4).

In embodiments, UE1 informs a communication network node, such as an eNB in LTE or a gNB in NR, about the reservation 1.2. The network node can exclude the reserved resources from the set of available resources that can be granted to other transmissions than the transmission from UE2 to UE1, particularly network-scheduled transmissions.

In embodiments, UE2, upon receiving the reservation 1.2 from UE1, can further relay the reservation to UEs in proximity to UE2. In this case, UE2 can include information about which node made the reservation, i.e. UE1. This helps UEs in proximity to UE2 (but potentially remote to UE1) learning about the reservation 1.2 prior to UE2's transmission 1.4.

When it comes to steps 1.3 and 1.4, in embodiments the UE2 determines 1.3 to use at least part of the reserved resources for transmitting data 1.4 to UE1. According to a first variant, the resources used UE2 are the same as the reserved resources by UE1. This is beneficial, for example, when UE2 is a P-UE with limited sensing capabilities. According to a second variant, the resources used by UE2 lies in an intersection of the reserved resources with a set of resources deemed suitable by UE2 in the determining step 1.3. Here UE2 may determine suitable resource via a channel/carrier sensing process similar to the one used by UE1 for the transmission to UE1 and compare the determining itself performs with the resources reserved by UE1. UE2 then prioritizes using at least part of the intersection for the transmission. According to embodiments, UE2 considers in step 1.3 using spatial directions or segments indicated in the reservation 1.2 for its transmission, whereas it refrains from transmitting in directions that are outside of the spatial segments indicated. If UE2 is not capable to form spatially restricted signals (beams) that comply with the reserved spatial segments, it refrains from transmission on those time/frequency resources that are associated with spatial segment restrictions.

In embodiments of steps 1.3 and 1.4, UE2 determines 1.3 not to use the reserved resources for the transmission to UE1. There can be different criteria for UE2 to decide not to use the reserved resources, but they are not in the focus of the current disclosure. In response to an indication received from UE1 in step 1.2 that UE2 can unbook the resources, UE2 sends an unbooking message to other UEs to unbook the resources. UE2 can also send a notification of such an unbooking action to UE1. In response to an indication received from UE1 in step 1.2 that UE2 is not allowed to unbook the resources, or that either UE1 or UE2 can unbook the resources but UE2 deems it is more beneficial for UE1 to unbook, UE2 sends a notification to UE1 that it is not going to use the reserved resources. In response to such a notification, UE1 can send an unbooking message to other UEs, i.e. UE3, to unbook the reserved resources.

In embodiments, one of UE1 or UE2 sends an unbooking message to unbook the reserved resources to a network node, e.g., an eNB or a gNB, and the network node notifies other UEs in the network of the unbooking, e.g. via a downlink control information. In embodiments, the eNB or gNB include the unbooked resources in the set of available resources for a network-scheduled transmission, for example at Mode-3 transmission.

In embodiments, the data transmission 1.4 from UE2 to UE1 contains feedback information from UE2 to UE1. The feedback information may comprise the ACK/NACK feedback indicating whether the transmitted packet is received correctly or not. The feedback information may contain an indicator of the quality for the channel between UE2 and UE1. For example, the CQI, PMI, RI. In another example the feedback information is full or partial channel state information. In embodiments, the data transmission 1.4 contains the normal data sent from UE2 to UE1. In embodiments, the data transmission 1.4 contains an indication to UE1 that UE2 has unbooked the reserved resources. In embodiments, the data transmission 1.4 contains measurement of signal strength such as RSRP, Reference Signal Received Quality (RSRQ) or RSSI value.

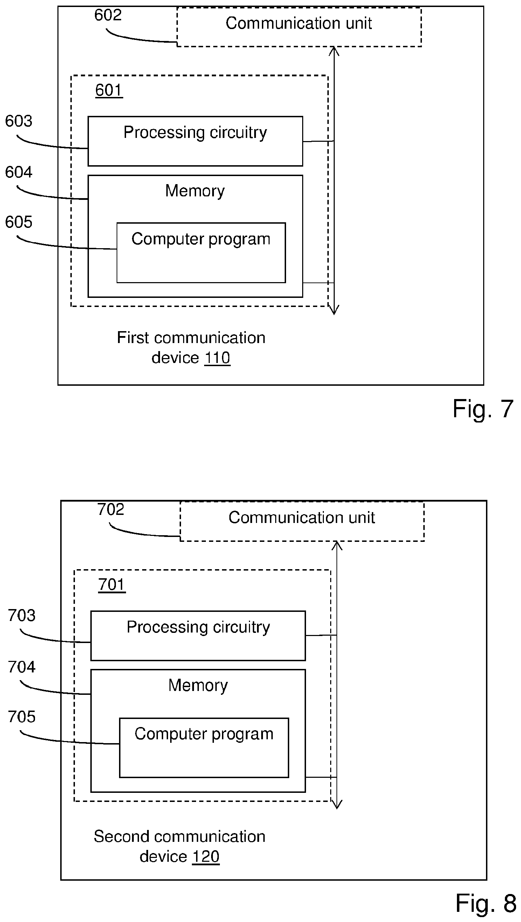

Fig. 7, in conjunction with fig. 3, illustrates a first wireless device 110 configured for D2D communication with a second wireless device 120. The first wireless device 110 comprises a processing circuitry 603 and a memory 604. The memory contains instructions executable by said processing circuitry, whereby the first wireless device 110 is operative for determining a set of wireless communication resources to reserve for a transmission of data from the second wireless device 120 to the first wireless device 110, and for reserving the determined set of wireless communication resources. the first wireless device 110 is further operative for informing the second wireless device 120 of the set of wireless communication resources determined for the transmission of data from the second wireless device 120 to the first wireless device 110, and for receiving, from the second wireless device 120, data transmitted on any of the reserved set of wireless communication resources, or information that the second wireless device 120 is not going to use the reserved set of wireless communication resources.

According to embodiments, the first wireless device 110 is operative for reserving the set of wireless communication resources and for informing the second wireless device 120 by transmitting one message to the second wireless device 120 and to third wireless devices 130 in the vicinity of the first wireless device 110, the message comprising information of the determined set of wireless communication resources.

According to embodiments, the first wireless device 110 is operative for reserving the set of wireless communication resources by transmitting, to third wireless devices 130 in the vicinity of the first wireless device 110, reservation information of the determined set of wireless communication resources, and operative for informing the second wireless device 120 by transmitting separate information to the second wireless device 120 of the determined set of wireless communication resources.

According to embodiments, the first wireless device 110 is operative for determining a set of wireless communication resources to reserve by observing wireless communication of third wireless devices 130 in the vicinity of the first wireless device 110, and selecting wireless communication resources not indicated to be used by the third communication device.

According to embodiments, the first wireless device 110 is operative for determining a set of wireless communication resources to reserve also based on capabilities of the first wireless device 110.

As described herein, the first wireless device 110 is further operative for determining which of the first wireless device 110 and the second wireless device 120, or both, that can unbook the reserved set of wireless communication resources, and for transmitting to the second wireless device 120, information on the determined unbooking capabilities of at least the second wireless device.

According to embodiments, the first wireless device 110 is further operative for receiving, from a wireless communication network 100, an instruction of a group of wireless communication resources that are selectable in the determination of the set of wireless communication resources.

According to embodiments, the information that the second wireless device 120 is not going to use the reserved set of wireless communication resources is an unbooking message informing that the reserved set of wireless communication resources are not to be used, or the information is a notification to the first wireless device 110 to send an unbooking message to third wireless devices 130 in the vicinity of the first wireless device 110.

According to embodiments, the first wireless device 110 may further comprise a communication unit 602, which may be considered to comprise conventional means for wireless communication with the second wireless device 120, with other wireless devices in its vicinity, and with the communication network 100, such as a transceiver for wireless transmission and reception of wireless signals. The instructions executable by said processing circuitry 603 may be arranged as a computer program 605 stored e.g. in said memory 604. The processing circuitry 603 and the memory 604 may be arranged in a sub-arrangement 601. The sub-arrangement 601 may be a micro-processor and adequate software and storage therefore, a Programmable Logic Device, PLD, or other electronic component(s)/processing circuit(s) configured to perform the methods mentioned above. The processing circuitry 603 may comprise one or more programmable processor, application-specific integrated circuits, field programmable gate arrays or combinations of these adapted to execute instructions.

The computer program 605 may be arranged such that when its instructions are run in the processing circuitry, they cause the first wireless device 110 to perform the steps described in any of the described embodiments of the first wireless device 110 and its method. The computer program 605 may be carried by a computer program product connectable to the processing circuitry 603. The computer program product may be the memory 604, or at least arranged in the memory. The memory 604 may be realized as for example a RAM (Random-access memory), ROM (Read-Only Memory) or an EEPROM (Electrical Erasable Programmable ROM). Further, the computer program 605 may be carried by a separate computer-readable medium, such as a CD, DVD or flash memory, from which the program could be downloaded into the memory 604. Alternatively, the computer program may be stored on a server or any other entity to which the first wireless device 110 has access via the communication unit 602. The computer program 605 may then be downloaded from the server into the memory 604.

Fig. 8, in conjunction with fig. 3, illustrates a second wireless device 120 configured for D2D communication with a first wireless device 110. The first wireless device 120 comprises a processing circuitry 703 and a memory 704. The memory contains instructions executable by said processing circuitry, whereby the second wireless device 120 is operative for receiving from the first wireless device 110, information on a first set of wireless communication resources that the first wireless device has reserved for a transmission of data from the second wireless device 120 to the first wireless device, and for transmitting, to the first wireless device, data on any of the reserved first set of wireless communication resources, or information that the second wireless device is not going to use the reserved first set of wireless communication resources.

According to embodiments, the second wireless device 120 is further operative for determining whether to use the reserved first set of wireless communication resources, and for performing the transmitting based on the result of the determining.

According to embodiments, the second wireless device 120 is further operative for determining a second set of wireless communication resources suitable for communication with the first wireless device 110. Further, the second wireless device 120 is operative for performing the "determining whether to use" by comparing the second set of wireless communication resources with the first set of wireless communication resources and selecting a subset of the first set and the second set of wireless communication resources that lies in an intersection of the first set and the second set of wireless communication resources. The second wireless device 120 is further operative for performing the transmitting of data by transmitting data on the selected subset of resources.

According to embodiments, the second wireless device 120 is operative for performing the determining of a second set of wireless communication resources based on sensing of communication of fourth wireless devices 140 in the vicinity of the second wireless device 120.

According to embodiments, the received information on a first set of wireless communication resources comprises information on spatial segments or directions in which to transmit the data to the first wireless device 110. Further, the second wireless device is operative for performing the determining whether to use based on information of spatial segments or directions for the transmission of the data to the first wireless device 110.

According to embodiments, the second wireless device 120 is further operative for receiving from the first wireless device 110, information on unbooking capabilities of at least the second wireless device 120. Further, the second wireless device 120 is operative for the transmitting of data or information that the second wireless device 120 is not going to use the reserved first set of wireless communication resources by taking the information on unbooking capabilities into account.

According to embodiments, the second wireless device 120 is operative for performing the transmitting by transmitting an unbooking message to the first wireless device 110 and to fourth wireless devices 140 in the vicinity of the second wireless device 120.

According to embodiments, the second wireless device 120 is operative for performing the transmitting by transmitting a notification to the first wireless device 110 to send an unbooking message to third wireless devices 130 in the vicinity of the first wireless device.

According to embodiments, the second wireless device 120 is further operative for receiving, from a wireless communication network 100, an instruction of a group of wireless communication resources that are selectable in the determination whether to use the reserved first set of wireless communication resources.

According to embodiments, the second wireless device 110 may further comprise a communication unit 702, which may be considered to comprise conventional means for wireless communication with the first wireless device 120, with other wireless devices in its vicinity and with the communication network 100, such as a transceiver for wireless transmission and reception of wireless signals. The instructions executable by said processing circuitry 703 may be arranged as a computer program 705 stored e.g. in said memory 704. The processing circuitry 703 and the memory 704 may be arranged in a sub-arrangement 701. The sub-arrangement 701 may be a micro-processor and adequate software and storage therefore, a Programmable Logic Device, PLD, or other electronic component(s)/processing circuit(s) configured to perform the methods mentioned above. The processing circuitry 703 may comprise one or more programmable processor, application-specific integrated circuits, field programmable gate arrays or combinations of these adapted to execute instructions.

The computer program 705 may be arranged such that when its instructions are run in the processing circuitry, they cause the second wireless device 120 to perform the steps described in any of the described embodiments of the second wireless device 120 and its method. The computer program 705 may be carried by a computer program product connectable to the processing circuitry 703. The computer program product may be the memory 704, or at least arranged in the memory. The memory 704 may be realized as for example a RAM (Random-access memory), ROM (Read-Only Memory) or an EEPROM (Electrical Erasable Programmable ROM). Further, the computer program 705 may be carried by a separate computer-readable medium, such as a CD, DVD or flash memory, from which the program could be downloaded into the memory 704. Alternatively, the computer program may be stored on a server or any other entity to which the second wireless device 120 has access via the communication unit 702. The computer program 705 may then be downloaded from the server into the memory 704.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A method performed by a first wireless device (110) for device to device (D2D) communication with a second wireless device (120), the method comprising:
determining (202) a set of wireless communication resources to reserve for a transmission of data from the second wireless device (120) to the first wireless device (110);
reserving (204) the determined set of wireless communication resources;
determining (203) which of the first wireless device (110) and the second wireless device (120), or both, that can unbook the reserved set of wireless communication resources;
transmitting to the second wireless device (120) a packet that 1) contains a message and 2) informs (206) the second wireless device (120) of the set of wireless communication resources determined for the transmission of data from the second wireless device (120) to the first wireless device (110);
transmitting (207) to the second wireless device (120), information on the determined unbooking capabilities of at least the second wireless device; and
receiving (208), from the second wireless device (120), a reply message transmitted on any of the reserved set of wireless communication resources, or information that the second wireless device (120) is not going to use the reserved set of wireless communication resources.

2. Method according to claim 1, wherein the reserving (204) and the informing (206) comprises transmitting one packet to the second wireless device (120) and to third wireless devices (130) in the vicinity of the first wireless device (110), the packet comprising information of the determined set of wireless communication resources.

3. Method according to claim 1, wherein the reserving (204) comprises transmitting, to third wireless devices (130) in the vicinity of the first wireless device (110), reservation information of the determined set of wireless communication resources, and the transmitting comprises transmitting separate information to the second wireless device (120) of the determined set of wireless communication resources.

4. Method according to any of claims 1-3, wherein the set of wireless communication resources comprises information of a set of spatial segments or directions in which the second wireless device (120) is to transmit wireless signals transporting the reply message received (208) from the second wireless device (120).

5. Method according to any of the preceding claims, wherein the determining (202) is performed by observing wireless communication of third wireless devices (130) in the vicinity of the first wireless device (110) and selecting wireless communication resources not indicated to be used by the third communication device.

6. Method according to claim 5, wherein the observing comprises reading control messages sent by the third wireless devices (130) or measuring signal strength over time for signals sent by the third wireless devices (130).

7. Method according to any of the preceding claims, wherein the determining (202) is further performed based on capabilities of the first wireless device (110).

8. Method according to any of the preceding claims, further comprising:
receiving (201), from a wireless communication network (100), an instruction of a group of wireless communication resources that are selectable in the determination (202) of the set of wireless communication resources.

9. Method according to any of the preceding claims, where the received (208) information that the second wireless device (120) is not going to use the reserved set of wireless communication resources is an unbooking message informing that the reserved set of wireless communication resources are not to be used, or the received (208) information is a notification to the first wireless device (110) to send an unbooking message to third wireless devices (130) in the vicinity of the first wireless device (110).

10. A method performed by a second wireless device (120) for device to device (D2D) communication with a first wireless device (110), the method comprising:
receiving (302),
from the first wireless device (110), a packet containing a message and information on a first set of wireless communication resources that the first wireless device has reserved for a transmission of data from the second wireless device (120) to the first wireless device;
receiving (304), from the first wireless device, information on unbooking capabilities of at least the second wireless device for the reserved set of wireless communication resources; and
transmitting (308), taking into account the information on the unbooking capabilities of at least the second wireless device, to the first wireless device, a reply message on any of the reserved first set of wireless communication resources, or information that the second wireless device is not going to use the reserved first set of wireless communication resources.

11. A first wireless device (110) configured for device to device (D2D) communication with a second wireless device (120), the first wireless device (110) comprising a processing circuitry (603) and a memory (604), said memory containing instructions executable by said processing circuitry, whereby the first wireless device (110) is operative for:
determining (202) a set of wireless communication resources to reserve for a transmission of data from the second wireless device (120) to the first wireless device (110);
reserving (204) the determined set of wireless communication resources;
determining (203) which of the first wireless device (110) and the second wireless device (120), or both, that can unbook the reserved set of wireless communication resources;
transmitting (206) to the second wireless device (120) a packet that: 1) contains a packet and 2) informs the second wireless device (120) of the set of wireless communication resources determined for the transmission of data from the second wireless device (120) to the first wireless device (110);
transmitting (207), to the second wireless device (120), information on the determined unbooking capabilities of at least the second wireless device; and
receiving (208), from the second wireless device (120), a reply message transmitted on any of the reserved set of wireless communication resources, or information that the second wireless device (120) is not going to use the reserved set of wireless communication resources.

12. A second wireless device (120) configured for device to device (D2D) communication with a first wireless device (110), the second wireless device (120) comprising a processing circuitry (703) and a memory (704), said memory containing instructions executable by said processing circuitry, whereby the second wireless device (120) is operative for:
receiving (302), from the first wireless device (110), a packet containing a message and information on a first set of wireless communication resources that the first wireless device has reserved for a transmission of data from the second wireless device (120) to the first wireless device;
receiving (304), from the first wireless device, information on unbooking capabilities of at least the second wireless device for the reserved set of wireless communication resources; and
transmitting (308), taking into account the information on the unbooking capabilities of at least the second wireless device, to the first wireless device, a reply message on any of the reserved first set of wireless communication resources, or information that the second wireless device is not going to use the reserved first set of wireless communication resources.

## Patentansprüche

1. Verfahren, das von einer ersten drahtlosen Vorrichtung (110) durchgeführt wird, zur Kommunikation von Vorrichtung zu Vorrichtung (D2D) mit einer zweiten drahtlosen Vorrichtung (120), wobei das Verfahren umfasst:
Bestimmen (202) eines Satzes von Drahtloskommunikationsressourcen zur Reservierung für eine Übertragung von Daten von der zweiten drahtlosen Vorrichtung (120) an die erste drahtlose Vorrichtung (110) ;
Reservieren (204) des bestimmten Satzes von Drahtloskommunikationsressourcen;
Bestimmen (203), welche der ersten drahtlosen Vorrichtung (110) und der zweiten Vorrichtung (120), oder beide, den reservierten Satz von Drahtloskommunikationsressourcen stornieren kann;
Senden eines Pakets, das 1) eine Nachricht enthält und 2) die zweite drahtlose Vorrichtung (120) über den zur Übertragung von Daten von der zweiten drahtlosen Vorrichtung (120) an die erste drahtlose Vorrichtung (110) bestimmten Satz von Drahtloskommunikationsressourcen informiert (206), an die zweite drahtlose Vorrichtung (120);
Senden (207) von Informationen über die bestimmten Stornierungsfähigkeiten zumindest der zweiten drahtlosen Vorrichtung an die zweite drahtlose Vorrichtung (120); und
Empfangen (208) einer Antwortnachricht, die auf einer des reservierten Satzes von Drahtloskommunikationsressourcen gesendet wird, oder von Informationen, dass die zweite drahtlose Vorrichtung (120) den reservierten Satz von Drahtloskommunikationsressourcen nicht verwenden wird, von der zweiten drahtlosen Vorrichtung (120).

2. Verfahren nach Anspruch 1, wobei das Reservieren (204) und das Informieren (206) ein Senden eines Pakets an die zweite drahtlose Vorrichtung (120) und an dritte drahtlose Vorrichtungen (130) in der Nachbarschaft der ersten drahtlosen Vorrichtung (110) umfasst, wobei das Paket Informationen des bestimmten Satzes von Drahtloskommunikationsressourcen umfasst.

3. Verfahren nach Anspruch 1, wobei das Reservieren (204) ferner umfasst:
Senden von Reservierungsinformationen des bestimmten Satzes von Drahtloskommunikationsressourcen an dritte drahtlose Vorrichtungen (130) in der Nachbarschaft der ersten drahtlosen Vorrichtung (110) und das Senden ein Senden von separaten Informationen des bestimmten Satzes von Drahtloskommunikationsressourcen an die zweite drahtlose Vorrichtung (120) umfasst.

4. Verfahren nach einem der Ansprüche 1 bis 3, wobei der Satz von Drahtloskommunikationsressourcen Informationen eines Satzes von Raumsegmenten oder - richtungen umfasst, in welchen die zweite drahtlose Vorrichtung (120) Drahtlossignale senden soll, die die von der zweiten drahtlosen Vorrichtung (120) empfangene (208) Antwortnachricht transportieren.

5. Verfahren nach einem der vorhergehenden Ansprüche, wobei das Bestimmen (202) durch Beobachten von Drahtloskommunikation von dritten drahtlosen Vorrichtungen (130) in der Nachbarschaft der ersten drahtlosen Vorrichtung (110) und Auswählen von Drahtloskommunikationsressourcen durchgeführt wird, die nicht als von der dritten Kommunikationsvorrichtung verwendet angezeigt sind.

6. Verfahren nach Anspruch 5, wobei das Beobachten ein Lesen von Steuernachrichten, die von den dritten drahtlosen Vorrichtungen (130) gesendet werden, oder Messen einer Signalstärke für Signale, die von den dritten drahtlosen Vorrichtungen (130) gesendet werden, im Lauf der Zeit umfasst.

7. Verfahren nach einem der vorhergehenden Ansprüche, wobei das Bestimmen (202) ferner basierend auf Fähigkeiten der ersten drahtlosen Vorrichtung (110) durchgeführt wird.

8. Verfahren nach einem der vorhergehenden Ansprüche, ferner umfassend:
Empfangen (201) einer Anweisung einer Gruppe von Drahtloskommunikationsressourcen, die bei der Bestimmung (202) des Satzes von Drahtloskommunikationsressourcen ausgewählt werden können, von einem Drahtloskommunikationsnetzwerk (100) .

9. Verfahren nach einem der vorhergehenden Ansprüche, wobei es sich bei den empfangenen (208) Informationen, dass die zweite drahtlose Vorrichtung (120) den reservierten Satz von Drahtloskommunikationsressourcen nicht verwenden wird, um eine Stornierungsnachricht handelt, die informiert, dass der reservierte Satz von Drahtloskommunikationsressourcen nicht verwendet wird, oder es sich bei den empfangenen (208) Informationen um eine Benachrichtigung an die erste drahtlose Vorrichtung (110) zum Senden einer Stornierungsnachricht an dritte drahtlose Vorrichtungen (130) in der Nachbarschaft der ersten drahtlosen Vorrichtung (110) handelt.

10. Verfahren, das von einer zweiten drahtlosen Vorrichtung (120) durchgeführt wird, zur Kommunikation von Vorrichtung zu Vorrichtung (D2D) mit einer ersten drahtlosen Vorrichtung (110), wobei das Verfahren umfasst:
Empfangen (302) eines Pakets, das eine Nachricht und Informationen über einen ersten Satz von Drahtloskommunikationsressourcen enthält, den die erste drahtlose Vorrichtung für eine Übertragung von Daten von der zweiten drahtlosen Vorrichtung (120) an die erste drahtlose Vorrichtung reserviert hat, von der ersten drahtlosen Vorrichtung (110);
Empfangen (304) von Informationen über Stornierungsfähigkeiten zumindest der zweiten drahtlosen Vorrichtung für den reservierten Satz von Drahtloskommunikationsressourcen von der ersten drahtlosen Vorrichtung; und
Senden (308) einer Antwortnachricht auf einer des reservierten ersten Satzes von Drahtloskommunikationsressourcen oder von Informationen, dass die zweite drahtlose Vorrichtung den reservierten ersten Satz von Drahtloskommunikationsressourcen nicht verwenden wird, unter Berücksichtigung der Informationen über die Stornierungsfähigkeiten zumindest der zweiten drahtlosen Vorrichtung an die erste drahtlose Vorrichtung.

11. Erste drahtlose Vorrichtung (110), die zur Kommunikation von Vorrichtung zu Vorrichtung (D2D) mit einer zweiten drahtlosen Vorrichtung (120) konfiguriert ist, wobei die erste drahtlose Vorrichtung (110) Verarbeitungsschaltungsanordnung (603) und einen Speicher (604) umfasst, wobei der Speicher Anweisungen enthält, die von der Verarbeitungsschaltungsanordnung ausgeführt werden können, wodurch die erste drahtlose Vorrichtung (110) ausgelegt ist zum:
Bestimmen (202) eines Satzes von Drahtloskommunikationsressourcen zur Reservierung für eine Übertragung von Daten von der zweiten drahtlosen Vorrichtung (120) an die erste drahtlose Vorrichtung (110) ;
Reservieren (204) des bestimmten Satzes von Drahtloskommunikationsressourcen;
Bestimmen (203), welche der ersten drahtlosen Vorrichtung (110) und der zweiten Vorrichtung (120), oder beide, den reservierten Satz von Drahtloskommunikationsressourcen stornieren kann;
Senden (206) eines Pakets an die zweite drahtlose Vorrichtung (120), das: 1) eine Nachricht enthält und 2) die zweite drahtlose Vorrichtung (120) über den zur Übertragung von Daten von der zweiten drahtlosen Vorrichtung (120) an die erste drahtlose Vorrichtung (110) bestimmten Satz von Drahtloskommunikationsressourcen informiert;
Senden (207) von Informationen über die bestimmten Stornierungsfähigkeiten zumindest der zweiten drahtlosen Vorrichtung an die zweite drahtlose Vorrichtung (120); und
Empfangen (208) einer Antwortnachricht, die auf einer des reservierten Satzes von Drahtloskommunikationsressourcen gesendet wird, oder von Informationen, dass die zweite drahtlose Vorrichtung (120) den reservierten Satz von Drahtloskommunikationsressourcen nicht verwenden wird, von der zweiten drahtlosen Vorrichtung (120).

12. Zweite drahtlose Vorrichtung (120), die zur Kommunikation von Vorrichtung zu Vorrichtung (D2D) mit einer ersten drahtlosen Vorrichtung (110) konfiguriert ist, wobei die zweite drahtlose Vorrichtung (120) Verarbeitungsschaltungsanordnung (703) und einen Speicher (704) umfasst, wobei der Speicher Anweisungen enthält, die von der Verarbeitungsschaltungsanordnung ausgeführt werden können, wodurch die zweite drahtlose Vorrichtung (120) ausgelegt ist zum:
Empfangen (302) eines Pakets, das eine Nachricht und Informationen über einen ersten Satz von Drahtloskommunikationsressourcen enthält, den die erste drahtlose Vorrichtung für eine Übertragung von Daten von der zweiten drahtlosen Vorrichtung (120) an die erste drahtlose Vorrichtung reserviert hat, von der ersten drahtlosen Vorrichtung (110);
Empfangen (304) von Informationen über Stornierungsfähigkeiten zumindest der zweiten drahtlosen Vorrichtung für den reservierten Satz von Drahtloskommunikationsressourcen von der ersten drahtlosen Vorrichtung; und
Senden (308) einer Antwortnachricht auf einer des reservierten ersten Satzes von Drahtloskommunikationsressourcen oder von Informationen, dass die zweite drahtlose Vorrichtung den reservierten ersten Satz von Drahtloskommunikationsressourcen nicht verwenden wird, unter Berücksichtigung der Informationen über die Stornierungsfähigkeiten zumindest der zweiten drahtlosen Vorrichtung an die erste drahtlose Vorrichtung.

## Revendications

1. Procédé réalisé par un premier dispositif sans fil (110) pour une communication de dispositif à dispositif (D2D) avec un deuxième dispositif sans fil (120), le procédé comprenant :
la détermination (202) d'un ensemble de ressources de communication sans fil à réserver pour une transmission de données du deuxième dispositif sans fil (120) au premier dispositif sans fil (110) ;
la réservation (204) de l'ensemble déterminé de ressources de communication sans fil ;
la détermination (203) du premier dispositif sans fil (110) ou du deuxième dispositif sans fil (120) ou des deux pouvant décommander l'ensemble réservé de ressources de communication sans fil ;
la transmission, au deuxième dispositif sans fil (120), d'un paquet qui 1) contient un message et 2) informe (206) le deuxième dispositif sans fil (120) de l'ensemble de ressources de communication sans fil déterminé pour la transmission de données du deuxième dispositif sans fil (120) au premier dispositif sans fil (110) ;
la transmission (207), au deuxième dispositif sans fil (120), d'informations sur les capacités déterminées pour décommander d'au moins le deuxième dispositif sans fil ; et
la réception (208), depuis le deuxième dispositif sans fil (120), d'un message de réponse transmis sur l'une quelconque de l'ensemble réservé de ressources de communication sans fil, ou d'informations que le deuxième dispositif sans fil (120) ne va pas utiliser l'ensemble réservé de ressources de communication sans fil.

2. Procédé selon la revendication 1, dans lequel la réservation (204) et l'information (206) comprennent la transmission d'un paquet au deuxième dispositif sans fil (120) et à des troisièmes dispositifs sans fil (130) à proximité du premier dispositif sans fil (110), le paquet comprenant des informations sur l'ensemble déterminé de ressources de communication sans fil.

3. Procédé selon la revendication 1, dans lequel la réservation (204) comprend la transmission, aux troisièmes dispositifs sans fil (130) à proximité du premier dispositif sans fil (110), d'informations de réservation de l'ensemble déterminé de ressources de communication sans fil, et la transmission comprend la transmission d'informations distinctes au deuxième dispositif sans fil (120) de l'ensemble déterminé de ressources de communication sans fil.

4. Procédé selon l'une quelconque des revendications 1 à 3, dans lequel l'ensemble de ressources de communication sans fil comprend des informations d'un ensemble de segments spatiaux ou de directions dans lesquelles le deuxième dispositif sans fil (120) doit transmettre des signaux sans fil transportant le message de réponse reçu (208) du deuxième dispositif sans fil (120)

5. Procédé selon l'une quelconque des revendications précédentes, dans lequel la détermination (202) est réalisée par l'observation d'une communication sans fil de troisièmes dispositifs sans fil (130) à proximité du premier dispositif sans fil (110) et la sélection de ressources de communication sans fil qui ne sont pas indiquées pour être utilisées par le troisième dispositif de communication.

6. Procédé selon la revendication 5, dans lequel l'observation comprend la lecture de messages de commande envoyés par les troisièmes dispositifs sans fil (130) ou la mesure d'une force de signal au fil du temps pour des signaux envoyés par les troisièmes dispositifs sans fil (130).

7. Procédé selon l'une quelconque des revendications précédentes, dans lequel la détermination (202) est en outre réalisée sur la base de capacités du premier dispositif sans fil (110).

8. Procédé selon l'une quelconque des revendications précédentes, comprenant en outre :
la réception (201), depuis un réseau de communication sans fil (100), d'une instruction d'un groupe de ressources de communication sans fil qui peuvent être sélectionnées dans la détermination (202) de l'ensemble de ressources de communication sans fil.

9. Procédé selon l'une quelconque des revendications précédentes, dans lequel les informations reçues (208) que le deuxième dispositif sans fil (120) ne va pas utiliser l'ensemble réservé de ressources de communication sans fil est un message pour décommander qui informe que l'ensemble réservé de ressources de communication sans fil ne va pas être utilisé, ou les informations reçues (208) sont une notification au premier dispositif sans fil (110) d'envoyer un message pour décommander aux troisièmes dispositifs sans fil (130) à proximité du premier dispositif sans fil (110).

10. Procédé réalisé par un deuxième dispositif sans fil (120) pour une communication de dispositif à dispositif (D2D) avec un premier dispositif sans fil (110), le procédé comprenant :
la réception (302), depuis le premier dispositif sans fil (110), d'un paquet contenant un message et des informations sur un premier ensemble de ressources de communication sans fil que le premier dispositif sans fil a réservé pour une transmission de données du deuxième dispositif sans fil (120) au premier dispositif sans fil ;
la réception (304), depuis le premier dispositif sans fil, d'informations sur des capacités pour décommander d'au moins le deuxième dispositif sans fil pour l'ensemble réservé de ressources de communication sans fil ; et
la transmission (308), en tenant compte des informations sur les capacités pour décommander d'au moins le deuxième dispositif sans fil, au premier dispositif sans fil, d'un message de réponse sur l'une quelconque du premier ensemble réservé de ressources de communication sans fil, ou d'informations que le deuxième dispositif sans fil ne va pas utiliser le premier ensemble réservé de ressources de communication sans fil.

11. Premier dispositif sans fil (110) configuré pour une communication de dispositif à dispositif (D2D) avec un deuxième dispositif sans fil (120), le premier dispositif sans fil (110) comprenant une circuiterie de traitement (603) et une mémoire (604), ladite mémoire contenant des instructions exécutables par ladite circuiterie de traitement, de telle manière que le premier dispositif sans fil (110) soit opérationnel pour :
déterminer (202) un ensemble de ressources de communication sans fil à réserver pour une transmission de données du deuxième dispositif sans fil (120) au premier dispositif sans fil (110) ;
réserver (204) l'ensemble déterminé de ressources de communication sans fil ;
déterminer (203) le premier dispositif sans fil (110) ou le deuxième dispositif sans fil (120) ou les deux pouvant décommander l'ensemble réservé de ressources de communication sans fil ;
transmettre (206), au deuxième dispositif sans fil (120), un paquet qui 1) contient un message et 2) informe le deuxième dispositif sans fil (120) de l'ensemble de ressources de communication sans fil déterminé pour la transmission de données du deuxième dispositif sans fil (120) au premier dispositif sans fil (110) ;
transmettre (207), au deuxième dispositif sans fil (120), des informations sur les capacités déterminées pour décommander d'au moins le deuxième dispositif sans fil ; et
recevoir (208), depuis le deuxième dispositif sans fil (120), un message de réponse transmis sur l'une quelconque de l'ensemble réservé de ressources de communication sans fil, ou des informations que le deuxième dispositif sans fil (120) ne va pas utiliser l'ensemble réservé de ressources de communication sans fil.

12. Deuxième dispositif sans fil (120) configuré pour une communication de dispositif à dispositif (D2D) avec un premier dispositif sans fil (110), le deuxième dispositif sans fil (120) comprenant une circuiterie de traitement (703) et une mémoire (704), ladite mémoire contenant des instructions exécutables par ladite circuiterie de traitement, de telle manière que le deuxième dispositif sans fil (120) soit opérationnel pour :
recevoir (302), depuis le premier dispositif sans fil (110), un paquet contenant un message et des informations sur un premier ensemble de ressources de communication sans fil que le premier dispositif sans fil a réservé pour une transmission de données du deuxième dispositif sans fil (120) au premier dispositif sans fil ;
recevoir (304), depuis le premier dispositif sans fil, des informations sur des capacités pour décommander d'au moins le deuxième dispositif sans fil pour l'ensemble réservé de ressources de communication sans fil ; et
transmettre (308), en tenant compte des informations sur les capacités pour décommander d'au moins le deuxième dispositif sans fil, au premier dispositif sans fil, un message de réponse sur l'une quelconque du premier ensemble réservé de ressources de communication sans fil, ou des informations que le deuxième dispositif sans fil ne va pas utiliser le premier ensemble réservé de ressources de communication sans fil.
